# EUROPÄISCHE PATENTANMELDUNG

(11) **EP 2 153 878 A1**
(43) Veröffentlichungstag der Anmeldung: **17.02.2010**
(21) Anmeldenummer: 09165992.0
(22) Anmeldetag: 21.07.2009
(51) Int. Cl.: B01D 46/30, B01D 46/00, B01D 53/04, B01D 53/84

(54) **Filtermodul**

(30) Priorität: 22.07.2008 AT 4042008 U
(71) Anmelder: Kasmanhuber Technisches Büro Ges. m.b.H., 9851 Lieserbrücke (AT)
(72) Erfinder: Kasmanhuber, Peter, 9851, Lieserbrücke (AT)
(74) Vertreter: KLIMENT & HENHAPEL

(57) **Zusammenfassung**

Filtermodul (1) zur biologischen Reinigung von verunreinigten Gasen, vorzugsweise von verunreinigter Luft mit einem einen Filterbehälter (2) tragenden Rahmen (3) sowie einer in den Filterbehälter (2) führenden Zuführleitung (4) und vorzugsweise einer aus dem Filterbehälter (2) führenden Abführleitung (5). Um den Transport sowie die Servicierung des Filtermoduls zu erleichtern, ist es vorgesehen, dass der Filterbehälter (2) aus einem gasdichten Textil- oder Kunststoffgewebe hergestellt ist.

## Beschreibung

Die vorliegende Erfindung bezieht sich auf ein Filtermodul zur biologischen Reinigung von verunreinigten Gasen, vorzugsweise von verunreinigter Luft mit einem einen Filterbehälter tragenden Rahmen sowie einer in den Filterbehälter führenden Zuführleitung und einer aus dem Filterbehälter führenden Abführleitung gemäß dem Oberbegriff des Anspruchs 1.

Solche Filtermodule kommen insbesondere in der Abluftreinigung zum Einsatz. Dabei wird geruchsbeladene oder schadstoffbelastete Abluft mittels eines Ventilators über ein Abluftleitungssystem aus beliebigen Absaugstellen zum Filtermodul befördert und nach der Reinigung an die Umgebung abgegeben. Gegebenfalls sind im Abluftleitungssystem noch zusätzliche Reinigungsprozesse vorgesehen, beispielsweise mittels Luftwäscher.

Darin erfolgt die kontinuierliche Befeuchtung der Abluft bis an die Sättigungsgrenze, die Absorption und Abscheidung von Feststoffen und wasserlöslichen Abluftinhaltsstoffen, sowie die Erwärmung des Abluftstromes auf eine für den nachfolgenden im Filtermodul stattfindenden biologischen Prozess optimale Temperatur.

Spezifische Schadstoffe können erforderlichenfalls durch chemische Wäsche abgeschieden werden.

Anschließend durchströmt die so vorgereinigte Abluft das Filtermodul, in welchem ein Filtermaterial zum Einsatz kommt, das auf die Verunreinigung des durchströmenden Gases abgestimmt ist und mittels ablaufender biologischer Prozesse die Reinigung des Gases bewirkt.

Bekannte Filtermodule bestehen aus einem Filterbehälter aus Metall, Kunststoff oder GfK. Dadurch ist der Aufbau sowie der Transport umständlich und wenig flexibel. Die Aufbauzeiten sind entsprechend lange anzusetzen. Außerdem gestaltet sich der Transport als schwierig, da die Filtermodule sehr sperrig sind. Das Tauschen des Filtermaterials ist entsprechend langwierig.

Es ist daher die Aufgabe der vorliegenden Erfindung, diesen Nachteil zu verhindern und einen Filtermodul vorzuschlagen, das rasch und flexibel aufgebaut werden kann, sowie leicht zu transportieren und warten ist.

Erfindungsgemäß wird dies bei einem Filtermodul zur biologischen Reinigung von verunreinigten Gasen, vorzugsweise von verunreinigter Luft mit einem einen Filterbehälter tragenden Rahmen sowie einer in den Filterbehälter führenden Zuführleitung und einer aus dem Filterbehälter führenden Abführleitung, dadurch erreicht, dass der Filterbehälter aus einem gasdichten Textil- oder Kunststoffgewebe hergestellt ist.

Dadurch kann der Filterbehälter zusammengelegt bzw. gefaltet werden. Es wird wesentlich weniger Transportraum benötigt als bei bekannten Filtermodulen. Am Einsatzort wird der Filterbehälter lediglich am Rahmen eingehängt und ist nach Anschluss der Zuführ- und Abführleitung bzw. nach Befüllen mit dem Filtermaterial sofort einsatzfähig. Die Ausbildung mittels gasdichtem Textil- oder Kunststoffgewebe gewährleistet optimale Feuchtigkeit und Temperatur für das Filtermaterial und schützt das Filtermaterial vor Umwelteinflüssen.

In einer bevorzugten Ausführungsvariante der Erfindung ist es vorgesehen, dass der Filterbehälter zumindest aus einer vorzugsweise rechteckigen Seitenwandung, einer damit verbundenen oberen Deckfläche sowie eine unteren Abschlussfläche besteht, die gemeinsam ein Filtervolumen begrenzen. Damit entspricht der Filterbehälter was sein Aussehen betrifft im wesentlichen den bekannten Filterbehältern aus Metall, Kunststoff oder GfK.

In einer weiteren bevorzugten Ausführungsvariante der Erfindung ist es vorgesehen, dass der Filterbehälter innerhalb des Filtervolumens einen an der Seitenwandung befestigten, gasdurchlässigen Filterboden aufweist, der vorzugsweise ebenfalls aus einem Textil- bzw. Kunststoffgewebe gefertigt ist und auf welchem ein Filtermaterial gehalten ist, auf welchem sich Mikroorganismen zwecks biologischer Reinigung des durchströmenden Gases ansiedeln kann. Auf diese Art und Weise entsteht eine Art doppelter Boden und kann die Abführleitung für das gereinigte Gas zwischen Filterboden und unterer Abschlussfläche aus dem Filterbehälter herausgeführt werden.

Alternativ kann aber auch vorgesehen sein, dass die das Filtervolumen begrenzende unter Abschlussfläche als gasdurchlässiger Filterboden ausgebildet ist und somit das Filtermaterial unmittelbar von der unteren Abschlussfläche getragen wird.

Zur Kontrolle des Filtermaterials ist in der oberen Deckfläche eines Inspektionsöffnung angeordnet.

Im Anschluß erfolgt nun eine detaillierte Beschreibung eines erfindungsgemäßen Filtermoduls anhand eines Ausführungsbeispiels. Dabei zeigt:
- Fig.1: eine Schnittansicht eines erfindungsgemäßen Filtermoduls
- Fig.2: eine Draufsicht auf mehrere nebeneinander angeordnete erfindungsgemäße Filtermodule

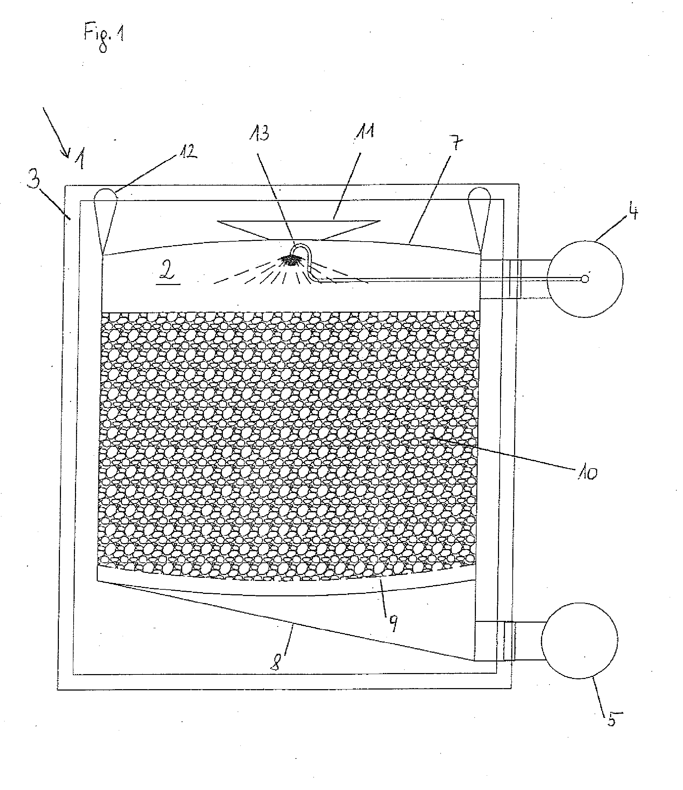

Fig.1 zeigt eine Schnittansicht eines erfindungsgemäßen Filtermoduls 1. Der aus gasdichtem Textil- oder Kunststoffgewebe hergestellte Filterbehälter 2 ist dabei mittels Befestigungsmittel 12 auf einem Rahmen 3 aufgehängt. Durch die Aufhängung werden Verspannungen während des Betriebs weitgehend vermieden.

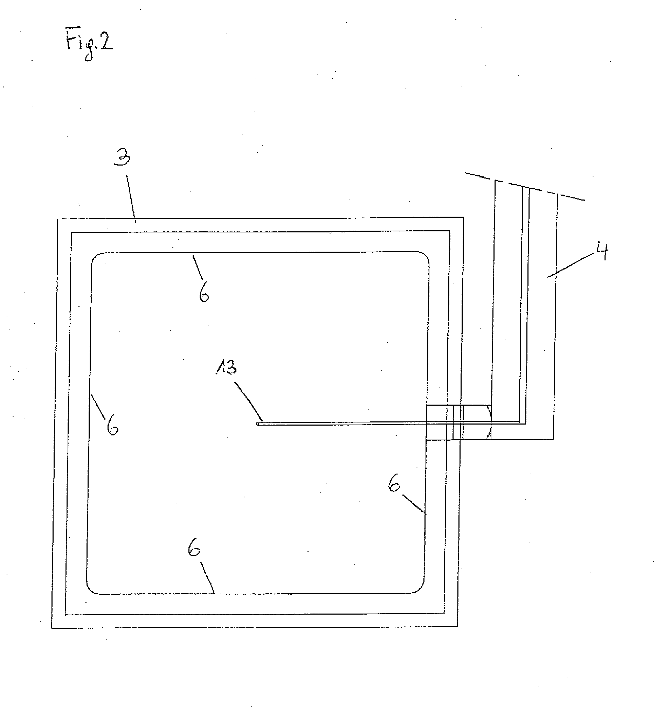

Der Filterbehälter 2 weist in seinem oberen Bereich eine Öffnung auf, über welche eine Zuführleitung 4 das zu reinigende Gas in den Filterbehälter 2 leitet und besteht weiters aus einer im wesentlichen rechteckigen Seitenwandung 6 (Fig.2) sowie einer oberen Deckfläche 7 und einer unteren Abschlussfläche 8, die gemeinsam ein Filtervolumen begrenzen. Im Inneren des Filtervolumens ist einer gasdurchlässiger Filterboden 9 vorgesehen, der sich über den gesamten Querschnitt des Filtervolumens spannt und auf welchem ein Filtermaterial 10, beispielsweise Hackschnitzel, Kokosmix oder auch anorganische Füllkörper gehalten ist, welches in Relation zum Volumen eine sehr große Oberfläche bietet, dh. ein Maximum an Lebensraum für die Besiedelung durch Mikroorganismen.

Zwischen Filterboden 9 und der das Filtervolumen nach unten begrenzenden unteren Abschlussfläche 8 ist eine Auslassöffnung vorgesehen, über welche das gefilterte Gas in eine Abführleitung 5 strömen kann. Gegebenenfalls kann das gereinigte Gas durch die Auslassöffnung auch direkt in die Umgebung strömen.

In einer bevorzugten Ausführungsvariante der Erfindung ist es vorgesehen, dass der Filterboden 9 gleichzeitig die untere Abschlussfläche 8 des Filterbehälters 2 bildet und somit das Gas nach dem Durchströmen de Filterbodens 9 unmittelbar in die Abführleitung 5 oder in die Umgebung strömt.

Zur Kontrolle des Filtermaterials 10 ist der Filterbehälter an seiner oberen Deckfläche 7 mit einer Inspektionsöffnung 11 versehen. Zwecks Befeuchtung des Filtermaterials 10 ist auch eine Sprinklervorrichtug 13 vorgesehen.

## Patentansprüche

1. Filtermodul (1) zur biologischen Reinigung von verunreinigten Gasen, vorzugsweise von verunreinigter Luft mit einem einen Filterbehälter (2) tragenden Rahmen (3) sowie einer in den Filterbehälter (2) führenden Zuführleitung (4) und vorzugsweise einer aus dem Filterbehälter (2) führenden Abführleitung (5), **dadurch gekennzeichnet, dass** der Filterbehälter (2) aus einem gasdichten Textil- oder Kunststoffgewebe hergestellt ist.

2. Filtermodul nach Anspruch 1, **dadurch gekennzeichnet, dass** der Filterbehälter (2) zumindest aus einer vorzugsweise rechteckigen Seitenwandung (6), einer damit verbundenen oberen Deckfläche (7) sowie eine unteren Abschlussfläche (8) besteht, die gemeinsam ein Filtervolumen begrenzen.

3. Filtermodul nach Anspruch 2, **dadurch gekennzeichnet, dass** der Filterbehälter (2) innerhalb des Filtervolumens einen an der Seitenwandung befestigten, gasdurchlässigen Filterboden (9) aufweist, auf welchem ein Filtermaterial (10) gehalten ist.

4. Filtermodul nach Anspruch 2, **dadurch gekennzeichnet, dass** die untere Abschlussfläche (8) als gasdurchlässiger Filterboden ausgebildet ist.

5. Filtermodul nach Anspruch 3 oder 4, **dadurch gekennzeichnet, dass** der Filterboden (9) aus einem Textil-oder Kunststoffgewebe hergestellt ist.

6. Filtermodul nach einem der Ansprüche 3 bis 5, **dadurch gekennzeichnet, dass** die Abführleitung (5) zwischen Filterboden (9) und unterer Abschlussfläche (8) aus dem Filterbehälter herausführt.

7. Filtermodul nach einem der Ansprüche 2 bis 6, **dadurch gekennzeichnet, dass** in der oberen Deckfläche (7) eine Inspektionsöffnung (11) angeordnet ist.
